# EUROPEAN PATENT APPLICATION

(11) **EP 2 418 541 A1**
(43) Date of publication of application: **15.02.2012**
(21) Application number: 10761429.9
(22) Date of filing: 06.04.2010
(51) Int. Cl.: G03B 21/14, G03B 21/00, H04N 5/74

(54) **LIGHT SOURCE DEVICE AND PROJECTION DISPLAY APPARATUS**

(30) Priority: 08.04.2009 JP 2009093989; 21.10.2009 WO PCT/JP2009/005514
(71) Applicant: Mitsubishi Electric Corporation, Tokyo 100-8310 (JP)
(72) Inventor: KOJIMA, Kuniko, Tokyo 100-8310 (JP); YAMADA, Akihiro, Tokyo 100-8310 (JP); KIDA, Hiroshi, Tokyo 100-8310 (JP); MATSUO, Hirofumi, Tokyo 100-8310 (JP)
(74) Representative: Whitlock, Holly Elizabeth Ann
(86) International application number: PCT/JP2010/002515
(87) International publication number: WO 2010/116725

(57) **Abstract**

In the light source device (10) of the projection type display apparatus, wherein light utilization efficiency is high, luminous intensity uniformity on a screen is also high, and the long life of the light source device can be achieved, and a first light source lamp (11), a second light source lamp (12) and a relay optical system (13) are arranged so that there is no part where an optical axis (13c1, 13c2, 13c3) of a first light flux (L1) from the first light source lamp (11) through the relay optical system (13) to an entrance end (15a) of a light intensity equalizing element (15) and an optical axis of a second light flux from the second light source lamp (12) to the entrance end (15a) agree with each other, and the optical axis (13c3) of the first light flux (L1) immediately before incidence on the entrance end (15a) and the optical axis (12c) of the second light flux (L2) from the second light source lamp (12) to the entrance end (15a) are substantially parallel to each other.

## Description

### TECHNICAL FIELD

The present invention relates to a light source device and a projection type display apparatus that use a plurality of light source lamps.

### BACKGROUND ART

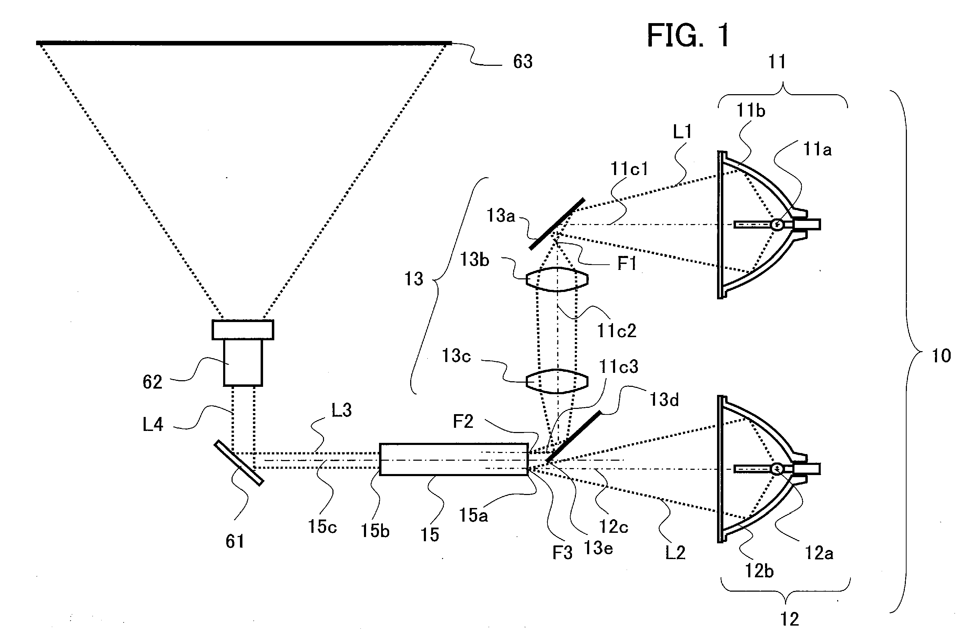

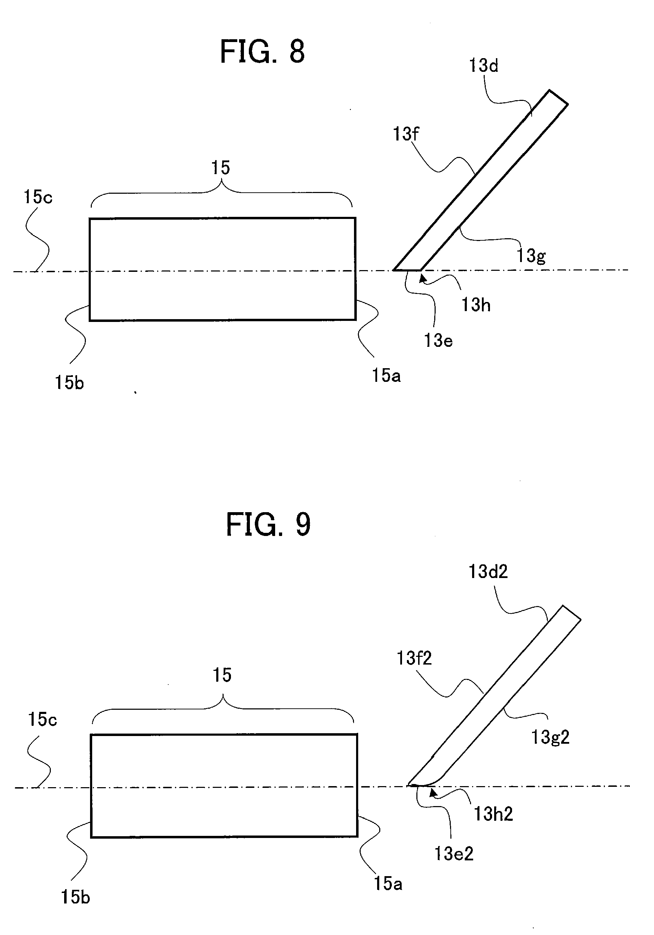

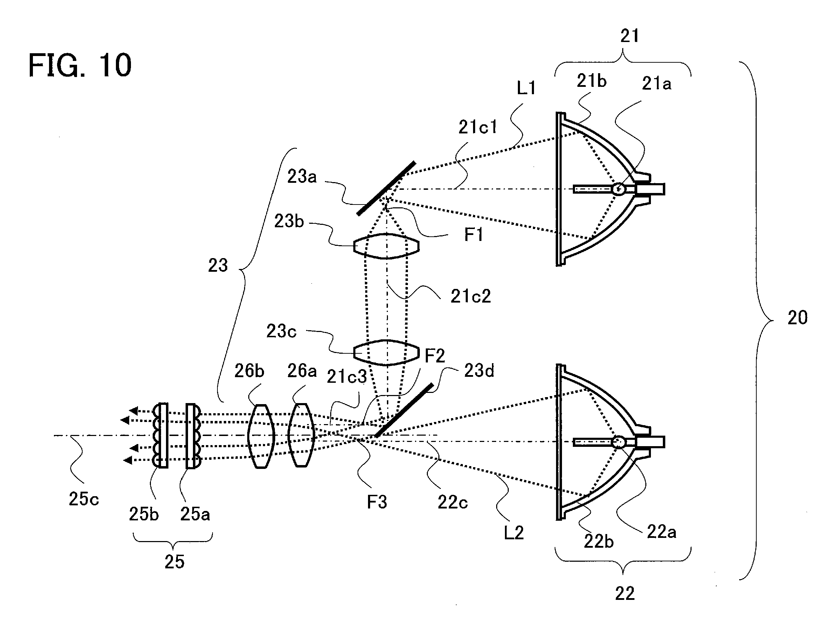

In order to realize large-sized images with high luminance displayed by a projection type display apparatus, a projection type display apparatus having a multi-lamp type light source device including a plurality of light source lamps is proposed. For example, Patent Document 1 (Japanese Patent Application Kokai Publication No. 2001-359025, paragraphs 0013 to 0018 and FIG. 1) proposes a light source device for a projection type display apparatus, in which light fluxes from two light source lamps disposed facing each other are synthesized through the use of a prism disposed near light converging points of the light source lamps. Furthermore, Patent Document 2 (Japanese Patent Application Kokai Publication No. 2005-115094, paragraphs 0099 to 0108, FIG. 9, FIG. 10.A and FIG. 10.B) proposes a structure, in which light fluxes from two light source lamps are guided to an entrance end face of a rod integrator through the use of two synthesizing mirrors disposed so as to be tilted toward different directions from each other.

### PRIOR ART DOCUMENT

### PATENT DOCUMENT

Patent Document 1: Japanese Patent Application Kokai Publication No. 2001-359025
Patent Document 2: Japanese Patent Application Kokai Publication No. 2005-115094

### DISCLOSURE OF THE INVENTION

### PROBLEMS TO BE SOLVED BY THE INVENTION

However, in the apparatus described in Patent Document 1, since the two light source lamps are disposed facing each other with the prism therebetween, an increase occurs in a proportion of light reaching light emitting portions of the light source lamps facing each other relative to loss light of the light source lamps. Thus, there are problems that light utilization efficiency is lowered and that the lives of the light source lamps are shortened by a rise in temperature of the light source lamps resulting from incidence of the loss light.

Furthermore, in the apparatus described in Patent Document 2, since each synthesizing mirrors are disposed at a position deviated in a direction perpendicular to an optical axis of the rod integrator, an increase occurs in an incident angle of each light flux emitted from each light source lamp, reflected at each synthesizing mirror and entering the rod integrator (as a result of this, an increase occurs in a converging angle in the case where two light fluxes reflected by two synthesizing mirrors and entering the rod integrator is regarded as a single light flux). In order to reduce (compensate for) an adverse effect of resulting from a fact that the light flux entering the rod integrator has a large converging angle (i.e., insufficient uniformity of the light intensity), the rod integrator has a tapered part. However, in such structure, the number of reflections of light beams within the rod integrator has variations and there is a problem that the uniformity of the light intensity at an exit end face of the rod integrator (as a result of this, luminous intensity uniformity) is degraded.

Therefore, the present invention is made to solve the problems of the above-described conventional art, and an object of the present invention is to provide a projection type display apparatus with high light utilization efficiency and high luminous intensity uniformity on a screen that can realize longer lives of light source devices.

### MEANS OF SOLVING THE PROBLEM

According to the present invention, a light source device includes a light intensity equalizing unit including an entrance end and an exit end, the light intensity equalizing unit converting a light flux incident on the entrance end into a light flux with an equalized intensity distribution, which is emitted from the exit end; a first light source unit emitting a first light flux; at least one bending unit guiding the first light flux emitted from the first light source unit to the entrance end of the light intensity equalizing unit; and a second light source unit emitting a second light flux traveling toward the entrance end of the light intensity equalizing unit, wherein the first light source unit, the second light source unit and the bending unit are arranged so that there is no part where an optical axis of the first light flux from the first light source unit through the bending unit to the entrance end of the light intensity equalizing unit and an optical axis of the second light flux from the second light source unit to the entrance end of the light intensity equalizing means agree with each other, and the optical axis of the first light flux immediately before incidence on the entrance end and the optical axis of the second light flux from the second light source unit to the entrance end are substantially parallel to each other.

### EFFECTS OF THE INVENTION

According to the present invention, high light utilization efficiency and high luminous intensity uniformity on a screen can be realized.

### BRIEF DESCRIPTION OF THE DRAWINGS

FIG. 1 is a diagram schematically illustrating a structure of a projection type display apparatus according to a first embodiment of the present invention;
FIG. 2A is a diagram schematically showing a distribution of a light flux at an entrance end of a light intensity equalizing element in a comparative example, FIG. 2B is a diagram schematically showing a distribution of a light flux at an entrance end of a light intensity equalizing element in the first embodiment, and FIG. 2C is a diagram schematically showing another example of a distribution of the light flux at the entrance end of the light intensity equalizing element in the first embodiment;
FIG. 3 is a diagram schematically illustrating an arrangement of a bending mirror in the comparative example;
FIG. 4 is a diagram illustrating a structure of a principal part of the projection type display apparatus according to the first embodiment;
FIG. 5 is an explanatory diagram illustrating a structure for calculating a relationship among an off-center amount of a central ray of a first light flux from a first light source lamp, an off-center amount of a central ray of a second light flux from a second light source lamp and light utilization efficiency;
FIG. 6 is a diagram showing a result of calculation of a relationship among the off-center amount of the central ray of the first light flux from the first light source lamp, the off-center amount of the central ray of the second light flux from the second light source lamp and the light utilization efficiency;
FIG. 7 is a diagram showing a result of calculation of a relationship between the off-center amount d3 shown in FIG. 4 and the light utilization efficiency;
FIG. 8 is a diagram illustrating an example of a shape of a bending mirror;
FIG. 9 is a diagram illustrating another example of a shape of a bending mirror;
FIG. 10 is a diagram schematically illustrating a structure of a projection type display apparatus according to a second embodiment of the present invention;
FIG. 11 is a diagram schematically illustrating a structure of a projection type display apparatus according to a third embodiment of the present invention;
FIG. 12 is a diagram schematically illustrating a structure of a projection type display apparatus according to a fourth embodiment of the present invention;
FIG. 13A is a diagram schematically showing a distribution of the first light flux from the first light source lamp at the entrance end of the light intensity equalizing element in the first embodiment and an off-center amount of a central ray of the first light flux, and FIG. 13B is a diagram schematically showing a distribution of the second light flux from the second light source lamp at the entrance end of the light intensity equalizing element and an off-center amount of a central ray of the second light flux;
FIG. 14 is a diagram illustrating a typical ray of the first light flux having the distribution shown in FIG. 13A at the entrance end of the light intensity equalizing element;
FIG. 15 is a diagram illustrating a typical ray of the second light flux having the distribution shown in FIG. 13B at the entrance end of the light intensity equalizing element;
FIG. 16 is a diagram illustrating an example of distributions of the first light flux from the first light source lamp and the second light flux from the second light source lamp at the entrance end of the light intensity equalizing element according to the first embodiment;
FIG. 17 is a diagram illustrating another example of a distribution of the first light flux emitted from the first light source lamp and a distribution of a second light flux emitted from the second light source lamp at the entrance end of the light intensity equalizing element according to the first embodiment;
FIG. 18 is a diagram conceptually illustrating behavior of loss light at the entrance end of the light intensity equalizing element according to the first embodiment; and
FIG. 19 is a diagram illustrating an example of a shape of a bending mirror.

### BEST MODE FOR CARRYING OUT THE INVENTION

### First Embodiment

FIG. 1 is a diagram schematically illustrating a structure of a projection type display apparatus according to a first embodiment of the present invention. As shown in FIG. 1, the projection type display apparatus according to the first embodiment includes a light source device 10 for emitting a light flux with equalized intensity; an image display element (light valve) 61 for modulating a light flux L3 emitted from the light source device 10 on the basis of an input image signal, thereby converting it into image light L4; and a projection optical system 62 for enlarging and projecting the image light L4 on a screen 63. Although the image display element 61 of reflection type is shown in FIG. 1, the image display element 61 may be an image display element of transmission type. The image display element 61 is, for example, a liquid crystal light valve, a digital micromirror device (DMD) or the like. In the case of a projection type display apparatus of rear projection type, the screen 63 is a part of the projection type display apparatus. Furthermore, arrangements of the light source device 10, the image display element 61, the projection optical system 62 and the screen 63 are not limited to the examples shown in the drawing.

The light source device 10 includes a first light source lamp 11 as a first light source means which is a first light source unit for emitting a first light flux L1; a second light source lamp 12 as a second light source means which is a second light source unit disposed in parallel with the first light source lamp 11, for emitting a second light flux L2; a light intensity equalizing element 15 as a light intensity equalizing means which is a light intensity equalizing unit for converting an incident light flux at an entrance end 15a into a light flux with an equalized intensity distribution and emitting it from an exit end 15b; and a relay optical system 13 for guiding the first light flux L1 emitted from the first light source lamp 11 to the entrance end 15a.

In the first embodiment, the first light flux L1 emitted from the first light source lamp 11 and the second light flux L2 emitted from the second light source lamp 12 are converging light fluxes respectively. To put it more precisely, a central component of the first light flux emitted from a light emitting center of the first light source lamp 11 out of the first light flux L1 and a central component of the second light flux emitted from a light emitting center of the second light source lamp 12 out of the second light flux L2 are converging light fluxes respectively. Since an illuminator of the first light source lamp 11 or the second light source lamp 12 has a finite size, strictly speaking, a light flux is also emitted from positions other than the light emitting center and the light flux emitted from the positions other than the light emitting center does not converge at a light converging point, at which the central component of the first light flux and the central component of the second light flux converge. Furthermore, the light flux emitted from the positions other than the light emitting center also converges at a circumferential area of the light converging point of the central component of the first light flux or the central component of the second light flux, while the light flux converging at the circumferential area has a certain extent. Each structure of the first light source lamp 11, the second light source lamp 12 and the relay optical system 13, and arrangements of the first light source lamp 11, the second light source lamp 12 and the relay optical system 13 with reference to the light intensity equalizing element 15 are determined so that there is no part where an optical axis 11c1, 11c2, 11c3 (i.e., a central ray of the first light flux L1) of the first light flux L1 from the first light source lamp 11 through the relay optical system 13 to the entrance end 15a of the light intensity equalizing element 15 and an optical axis 12c (i.e., a central ray of the second light flux L2) of the second light flux L2 from the second light source lamp 12 to the entrance end 15a of the light intensity equalizing element 15 agree with each other, and the optical axis 11c3 of the first light flux L1 immediately before incidence on the entrance end 15a and the optical axis 12c of the second light flux L2 are substantially parallel to each other.

The wording "arrangements ... are substantially parallel to" means that the first light source lamp 11, the second light source lamp 12 and the relay optical system 13 are arranged so that the optical axis 11c3 of the first light source lamp 11 (i.e., the central ray of the first light flux emitted from the first light source lamp 11 at the entrance end 15a of the light intensity equalizing element 15) and the optical axis 12c of the second light source lamp 12 (i.e., the central ray of the second light flux emitted from the second light source lamp 12 at the entrance end 15a of the light intensity equalizing element 15) are parallel or are almost assumed to be parallel. FIG. 1 shows a case where the first light source lamp 11, the second light source lamp 12, the relay optical system 13 and the light intensity equalizing element 15 are arranged so that the first optical axis 11c3 of the first light source lamp 11 and an optical axis 15c of the light intensity equalizing element 15 are parallel, and also the second optical axis 12c of the second light source lamp 12 and the optical axis 15c of the light intensity equalizing element 15 are parallel. Furthermore, the relay optical system 13 includes a first bending mirror 13a and a second bending mirror 13d which are bending units for bending an optical path of the first light flux L1, and two lens elements 13b and 13c.

Instead of provision of the relay optical system, it is possible to use a structure in which the first light source lamp 11 and the second light source lamp 12 are arranged so that the optical axis 11c1 of the first light source lamp 11 and the optical axis 12c of the second light source lamp 12 intersect at right angle and a single bending mirror is provided for guiding the first light flux L1 to the entrance end 15a of the light intensity equalizing element 15. In this case, a bending mirror or a bending mirror nearest to the entrance end 15a of the light intensity equalizing element 15 such as the above-described second bending mirror 13d is referred to as a final bending unit.

The first light source lamp 11 includes, for example, an illuminator 11a for emitting white light and an ellipsoidal mirror 11b disposed around the illuminator 11a. The ellipsoidal mirror 11b reflects a light flux emitted from a first focus corresponding to a first center of ellipse and collects it on a second focus corresponding to a second center of the ellipse. The illuminator 11a is disposed near the first focus of the ellipsoidal mirror 11b and a light flux emitted from the illuminator 11a converges near the second focus of the ellipsoidal mirror 11b. Further, the second light source lamp 12 includes, for example, an illuminator 12a for emitting white light and an ellipsoidal mirror 12b disposed around the illuminator 12a. The ellipsoidal mirror 12b reflects a light flux emitted from a first focus corresponding to a first center of ellipse and collects it on a second focus corresponding to a second center of the ellipse. The illuminator 12a is disposed near the first focus of the ellipsoidal mirror 12b and a light flux emitted from the illuminator 12a converges near the second focus of the ellipsoidal mirror 12b. Furthermore, parabolic mirrors can be used as a substitute for the ellipsoidal mirrors 11b and 12b. In this case, it is effective to substantially parallelize light fluxes emitted from the illuminators 11a and 12a by the parabolic mirrors and then to collect it by a condenser lens (not shown in the drawing). Moreover, concave mirrors other than the parabolic mirrors can also be used as a substitute for the ellipsoidal mirrors 11b and 12b. Furthermore, the number of the light source lamps may be three or more.

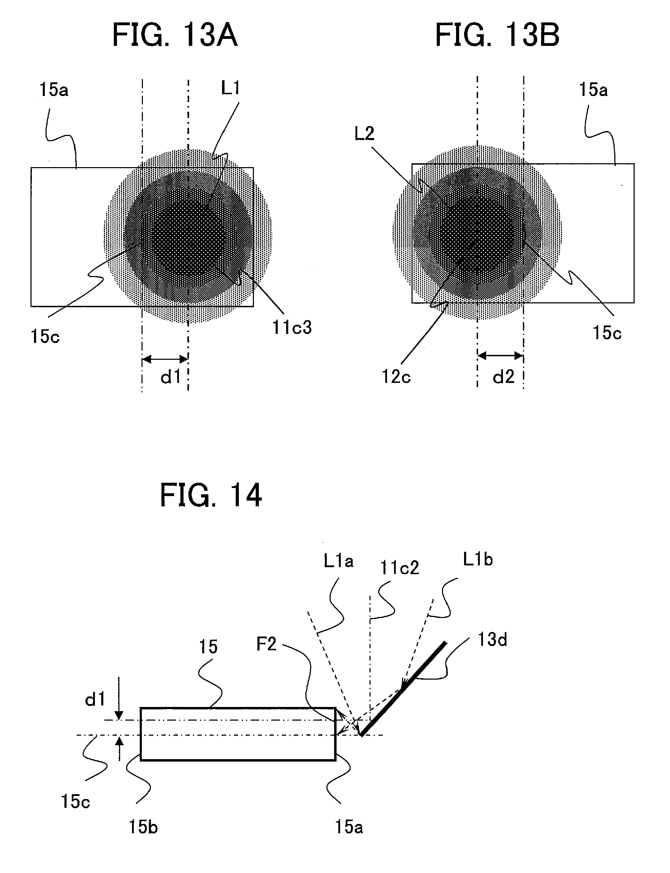

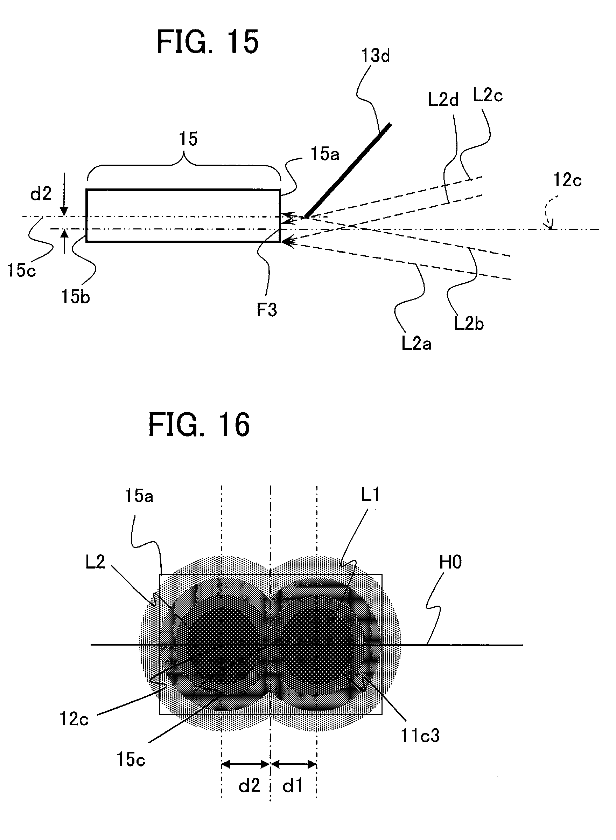

Regarding the first light flux. L1 in FIG. 1, a state where the light flux emitted from the illuminator 11a converges near a first light converging point F1 of the ellipsoidal mirror 11b is conceptually illustrated. Similarly, regarding the second light flux L2, a state where the light flux emitted from the illuminator 12a converges near a light converging point F3 of the ellipsoidal mirror 12b is conceptually illustrated. In the actual light source lamps, since the illuminators are not ideal point light sources and have a finite size, the light fluxes L1 and L2 generally includes not only a light flux component converging at the light converging point but also a lot of light flux components not converging at the light converging point (light flux components distributed outside the light flux component converging at the light converging point), as shown in FIG. 1 as a straight line (a broken line). The light fluxes that do not converge at the light converging point are illustrated in FIG. 14 and FIG. 15 to be described below.

Further, in the projection type display apparatus according to the first embodiment, the first light source lamp 11 and the first bending mirror 13a are arranged so that the first light converging point F1 of the first light flux L1 is positioned closer to the light intensity equalizing element 15 in comparison with the first bending mirror 13a. Moreover, the lens element 13b, the lens element 13c, the second bending mirror 13d and the light intensity equalizing element 15 are arranged so that the first light flux L1 which converges at a first light converging point F1 is then collected at a second light converging point F2 by the lens 13b, the lens 13c and the second bending mirror 13d, and the second light converging point F2 (final converging point) is disposed near the entrance end 15a of the light intensity equalizing element 15. The second light flux L2 which is collected by the ellipsoidal mirror 12b directly converges at a light converging point F3 near the entrance end 15a of the light intensity equalizing element 15, through no optical element. Furthermore, in the projection type display apparatus according to the first embodiment, a first incidence position where the central ray of the first light flux L1 (i.e., the optical axis 11c3) (being parallel to the optical axis 11c3 and parallel to the optical axis 15c of the light intensity equalizing element 15 in the first embodiment) enters the entrance end 15a, and a second incidence position where the central ray of the second light flux L2 (i.e., the optical axis 12c) (being parallel to the optical axis 15c of the light intensity equalizing element 15 in the first embodiment) enters the entrance end 15a are different positions from each other. Moreover, both of the positions are deviated from the optical axis 15c of the light intensity equalizing element 15 (positions shifted at distances of off-center amounts d1 and d2 to be described below). The first light converging point F1 is disposed closer to the light intensity equalizing element 15 in comparison with the first bending mirror 13a in FIG. 1, but the position is not limited to this example.

It is desirable that the second bending mirror 13d as the final bending unit be disposed so as not to block the central ray (which coincides with the optical axis 12c) of the second light flux L2 traveling from the second light source lamp 12 toward the entrance end 15a. It is more desirable that arrangement be adopted so as to block no central component of the light flux. The central component of the light flux means a light flux component emitted from a light emitting center of a light source lamp and converging at the light converging point.
A position of an end portion 13e of the second bending mirror 13d on a side of the optical axis 12c of the second light source lamp 12 (a side surface connecting a light reflecting surface and a back surface thereof) in a direction perpendicular to the optical axis 15c is normally on or near the optical axis 15c. However, for example, if the light emitting intensity of the first light source lamp 11 is larger than the light emitting intensity of the second light source lamp 12, in order to increase the light utilization efficiency of the whole apparatus, it is desirable that the end portion 13e be positioned closer to the optical axis 12c (the central ray of the second light flux L2) of the second light source lamp 12 in comparison with the optical axis 15c. Conversely, for example, if the light emitting intensity of the second light source lamp 12 is larger than the light emitting intensity of the first light source lamp 11, in order to increase the light utilization efficiency of the whole apparatus, it is desirable that the end portion 13e be positioned closer to the central ray (optical axis 11c3) of the first light flux L1 in comparison with the optical axis 15c.

A degree of blocking the second light flux L2 by the second bending mirror 13d depends on not only its position but also its size. In order to reduce the degree of blocking the second light flux L2, it is desirable that the second bending mirror 13d be smaller in size. Conversely, in order to increase the first light flux L1 traveling toward the entrance end 15a, it is desirable the second bending mirror 13d be larger in size. It is desirable that the second bending mirror 13d have a reflecting surface which is large in size enough to reflect the whole of the central component of the first light flux. Therefore, in the first embodiment, as shown in FIG. 1, the second bending mirror 13d that can reflect the whole of the central component of the first light flux is disposed at a position where the first light flux L1 and the second light flux L2 converge enough and no central component of the second light flux is blocked. Furthermore, it is possible to adopt a structure where the second bending mirror 13d cannot reflect a part of the central component of the first light flux or blocks part of the central component of the second light flux.

The light intensity equalizing element 15 has a function of equalizing light intensity (i.e., reducing illumination irregularities) of the first light flux L1 and the second light flux L2, in cross sections of the light fluxes (i.e., in planes which are orthogonal to the optical axis 15c of the light intensity equalizing element 15).
For example, the light intensity equalizing element 15 is a polygonal pillar-shaped rod (i.e., a pillar-shaped element whose cross section is polygonal in shape) which is made of transparent material such as glass, resin or the like and is structured so that inside of side walls is entirely a reflection surface, or the light intensity equalizing element 15 is a pipe (pipe-shaped element) which is assembled into a tube shape with a light reflection surface inside and whose cross section is polygonal in shape. If the light intensity equalizing element 15 is a polygonal-pillar rod, light is reflected several times according to total internal reflection function at an interface between the transparent material and air, and then the light is exited from the exit end. If the light intensity equalizing element 15 is a polygonal pipe, light is reflected several times according to reflection function by a surface mirror facing inward, and then the light is exited from the exit end (exit opening). If the light intensity equalizing element 15 has an appropriate length in a light-flux travelling direction, light which has been internally reflected several times is irradiated in a superposition manner near the exit end 15b of the light intensity equalizing element 15, and substantially-equalized intensity distribution can be obtained near the exit end 15b of the light intensity equalizing element 15.

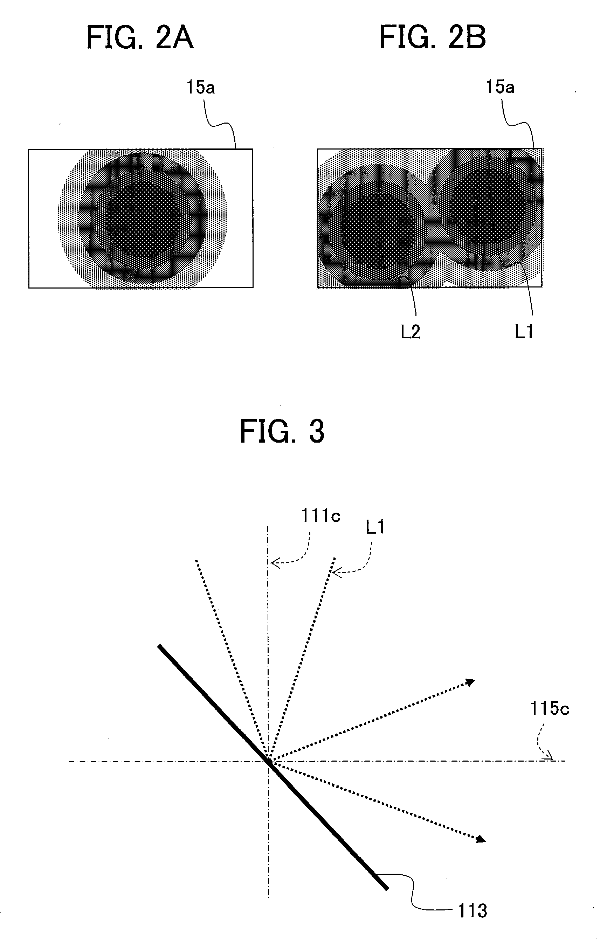

FIGs. 2A and 2B are explanatory diagrams schematically illustrating distributions of light fluxes at the entrance end 15a of the light intensity equalizing element 15. In FIGs. 2A and 2B, a dense-colored (nearly black) portion is an area where a light flux is strong (bright), and the light flux is weaker (darker) where color is thinner (closer to white). FIG. 2A shows an example of distribution of a light flux at the entrance end of the light intensity equalizing element, in the case of a comparative example in which a single light source lamp is used. FIG. 2A shows the distribution that light intensity peaks near a center of the entrance end 15a and gradually darkens toward periphery. On the other hand, FIG. 2B shows an example of distribution of light fluxes at the entrance end 15a of the light intensity equalizing element 15, in the case of the present invention in which two light source lamps are used. FIG. 2B shows the example that, at the entrance end 15a of the light intensity equalizing element 15, a light irradiation area by the first light source lamp 11 and a light irradiation area by the second light source lamp 12 partially overlap one another.

A description will be made as to a reason why the light flux at the entrance end 15a has the distribution shown in FIG. 2A when a single light source lamp is used. If the illuminator of the light source lamp is an ideal point light source, a light flux emitted from the illuminator converges at the light converging point of the ellipsoidal mirror ideally. However, since the illuminator has a finite size (in general, a diameter in a direction of the optical axis is about 0.8 mm to 1.5 mm) and there are influences resulting from arrangement accuracy of the illuminator, shape accuracy of the ellipsoidal mirror and so on, actually the converging light flux has a distribution as shown in FIG. 2A. Furthermore, since the converging light flux has the distribution as shown in FIG. 2A, all of the light flux does not enter the entrance end 15a of the light intensity equalizing element 15 and a part of the light flux propagates outside the entrance end 15a, thereby not being used for image projection.

FIG. 3 is a diagram schematically showing an arrangement of a bending mirror in a comparative example. FIG. 3 shows a structure that a single light source lamp (not shown in the drawing) is provided, a central ray of a light flux (an optical axis 111c) from the light source lamp to the bending mirror 113 is orthogonal to an optical axis 115c of a light intensity equalizing element 115 and a central ray of a light flux L1 reflected by the bending mirror 113 agrees with the optical axis 115c of the light intensity equalizing element. In the comparative example shown in FIG. 3, since the bending mirror 113 which has a sufficiently large reflection surface can be obtained, the light flux L1 from the light source lamp can be bent with loss reduced.

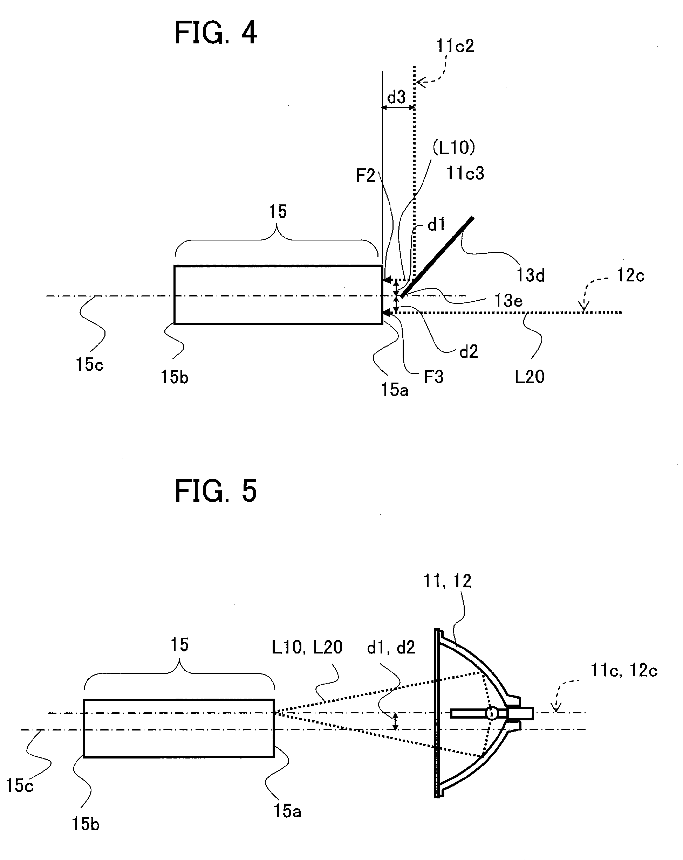

FIG. 4 is a diagram showing a structure of a principal part of the projection type display apparatus according to the first embodiment. FIG. 4 shows the second bending mirror 13d and the light intensity equalizing element 15. In the first embodiment, elements are arranged so that the light converging point F2 of the first light flux L1 from the relay optical system 13 (shown in FIG. 1) and the second focus of the ellipsoidal mirror 12b of the second light source lamp 12 (shown in FIG. 1) (the light converging point F3) are near the entrance end 15a of the light intensity equalizing element 15. Furthermore, it is structured that there is no part where the first optical axis 11c3 which is one of the optical axes of the first light flux L1 from the first light source lamp 11 and is closer to the light intensity equalizing element 15 in comparison with the bending mirror 13d and the second optical axis 12c of the second light flux from the second light source lamp 12 agree with each other, and the first optical axis 11c3 and the second optical axis 12c are substantially parallel to each other.

In a case where the first light flux L1 from the first light source lamp 11 enters the entrance end 15a of the light intensity equalizing element 15 by the relay optical system 13, and at the same time, the second light flux L2 from the second light source lamp 12 enters the entrance end 15a of the light intensity equalizing element 15, the second bending mirror 13d cannot have an enough size so as not to block the second light flux L2 from the " second light source lamp 12 as much as possible. For this reason, in the structure shown in FIG. 4, the first light flux L1 and the second light flux L2 are inevitably lost in some degree.

Suppose a central ray L10 (an optical axis 13c1) of the first light flux L1 which is bent by the second bending mirror 13d and a central ray L20 (the optical axis 12c) of the first light flux L2 are caused to agree with the optical axis 15c of the light intensity equalizing element 15, optical loss further increases. For this reason, in the projection type display apparatus according to the first embodiment, the off-center amount d1 of the central ray L10 of the first light flux L1 which is bent by the first bending mirror 13 with reference to the optical axis 15c of the light intensity equalizing element 15 and the off-center amount d2 of the central ray L20 of the second light flux L2 with reference to the optical axis 15c of the light intensity equalizing element 15 are set to values more than 0.

FIG. 5 is an explanatory diagram showing a structure for calculating a relationship between the off-center amounts d1 and d2 and light utilization efficiency. As shown in FIG. 5, if it is structured so that the central ray L10 of the first light flux from the first light source lamp 11 enters in a position of the off-center amount d1, for example, the first light flux L1 from the first light source lamp 11 converges at a position at a distance of the off-center amount d1, at the entrance end 15a of the light intensity equalizing element 15, and thus the light utilization efficiency is lowered at the entrance end 15a of the light intensity equalizing element 15. Similarly, as shown in FIG. 5, if it is structured so that the central ray L20 of the second light flux from the second light source lamp 12 enters a position of the off-center amount d2, for example, the second light flux L2 from the second light source lamp 12 converges at a position at a distance of the off-center amount d2, at the entrance end 15a of the light intensity equalizing element 15, and thus the light utilization efficiency is lowered at the entrance end 15a of the light intensity equalizing element 15.

FIG. 13A is a diagram schematically showing a distribution of the first light flux L1 from the first light source lamp 11 at the entrance end 15a of the light intensity equalizing element 15 in the first embodiment and the off-center amount d1 of the central ray (optical axis 11c3) of the first light flux L1, and FIG. 13B is a diagram schematically showing a distribution of the second light flux L2 from the second light source lamp 12 at the entrance end 15a of the light intensity equalizing element 15 and the off-center amount d2 of the central ray (optical axis 12c) of the second light flux L2. Furthermore, FIG. 14 is a diagram illustrating a typical ray (examples of light ray not converging on the light converging point F2) L1a, L1b of the first light flux L1 having the distribution shown in FIG. 13A at the entrance end 15a of the light intensity equalizing element 15. FIG. 15 is a diagram illustrating a typical ray (examples of light ray not converging on the light converging point F3) L2a, L2b, L2c, L2d of the second light flux L2 having the distribution shown in FIG. 13B at the entrance end 15a of the light intensity equalizing element 15.

The off-center amount d1 is a distance from the optical axis 15c of the light intensity equalizing element 15 to the optical axis 11c3 of the first light flux L1, and the off-center amount d2 is a distance from the optical axis 15c of the light intensity equalizing element 15 to the optical axis 12c of the second light flux L2. As has already been described, since the illuminators 11a and 12a are lamps having a certain size and there are errors in position of the illuminators 11a and 12a, errors in shape and position of the ellipsoidal mirrors 11b and 12b, and other errors, the first light flux L1 includes the light flux components (e.g., the light rays L1a and L1b) not converging at the light converging point F2 as shown in FIG. 14 and the second light flux L2 includes the light flux components (e.g., the light rays L2a, L2b, L2c and L2d) not converging at the light converging point F3 as shown in FIG. 15. As a result, as has been indicated in FIGs. 2A and 2B and FIGs. 13A and 13B, the converging light flux from the light source lamp travels as a light flux having a distribution (extent) to the entrance end 15a.

FIG. 16 is a diagram illustrating an example of a distribution of the first light flux L1 from the first light source lamp 11 and a distribution the second light flux L2 from the second light source lamp 12 at the entrance end 15a of the light intensity equalizing element 15 according to the first embodiment. In the example shown in FIG. 16, the entrance end 15a is a rectangle having a long side and a short side, a position (first incidence position) of the central ray 11c3 of the first light flux L1 at the entrance end 15a and a position (second incidence position) of the central ray 12c of the second light flux L2 at the entrance end 15a are deviated in opposite directions with reference to the optical axis 15c of the light intensity equalizing element 15 (positions with the off-center amounts d1 and d2). Furthermore, in the example shown in FIG. 16, the first incidence position (position of the optical axis 11c3 in FIG. 16) and the second incidence position (position of the optical axis 12c in FIG. 16) are positions on the first reference line H0 extending in a direction of the long side and passing through the optical axis 15c of the light intensity equalizing element 15.

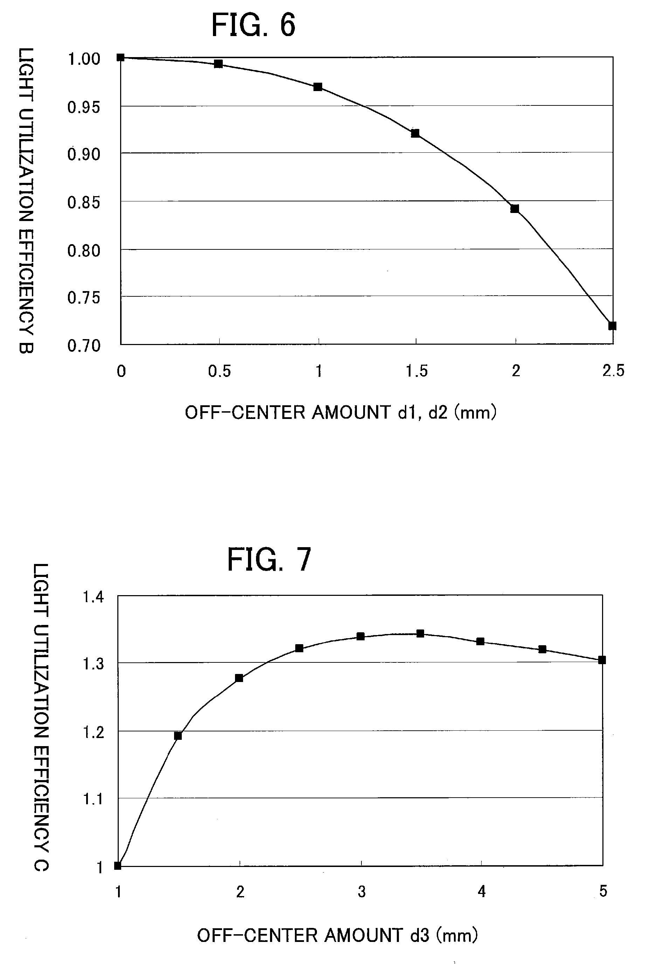

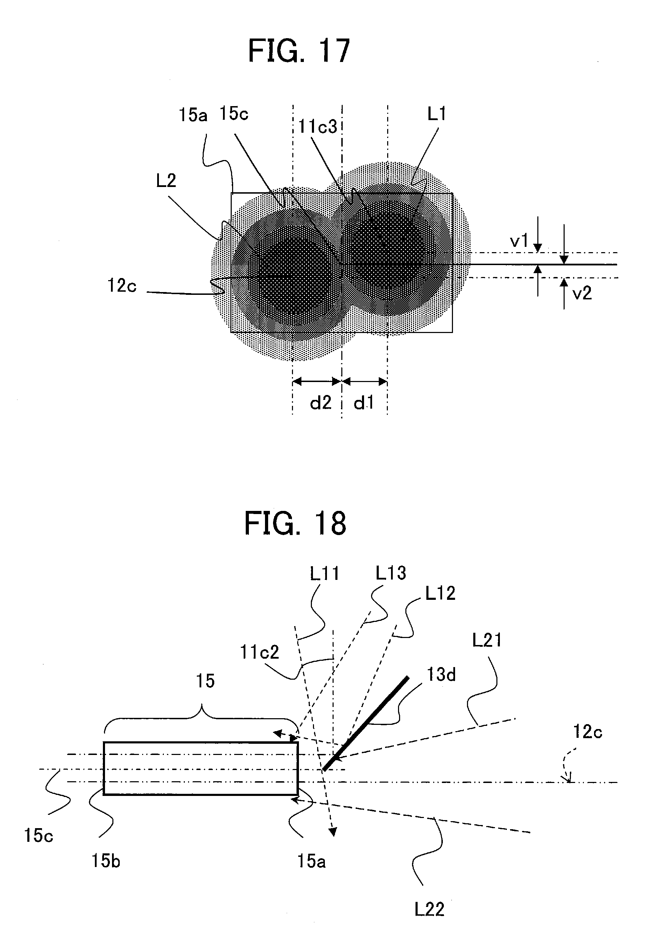

FIG. 17 is a diagram illustrating another example of a distribution of the first light flux L1 emitted from the first light source lamp 11 and a distribution of the second light flux L2 emitted from the second light source lamp 12 at the entrance end 15a of the light intensity equalizing element 15 according to the first embodiment. In the example shown in FIG. 17, the entrance end 15a is a rectangle having a long side and a short side. A position of the central ray 11c3 of the first light flux L1 (first incidence position) and a position of the central ray 12c of the second light flux L2 (second incidence position) on the entrance end 15a are positions (positions with the off-center amounts d1, d2) deviated to opposite sides in a direction of the long side relative to the optical axis 15c of the light intensity equalizing element 15 and are positions (positions with off-center amounts v1, v2) deviated to opposite sides in a direction of the short side relative to the optical axis 15c of the light intensity equalizing element 15. It is desirable that whether the positions of two light fluxes entering the entrance end 15a should be arranged in a direction of the long side as shown in FIG. 16 or in a slanting direction (or a diagonal direction) as shown in FIG. 7 be determined in consideration of the improvement of the light utilization efficiency and the improvement of the light luminous uniformity on a screen.

FIG. 18 is a diagram conceptually illustrating behavior of loss light at the entrance end 15a of the light intensity equalizing element 15 according to the first embodiment. If the first light flux L1 and the second light flux L2 are deviated by the off-center amounts d1, d2, the converging light fluxes converge on positions deviated by the off-center amounts d1, d2 and the light flux that does not enter the entrance end 15a of the light intensity equalizing element 15 (i.e., loss light that cannot be used) increases. In FIGs. 13A and 13B, the loss light that is headed for the entrance end 15a of the light intensity equalizing element 15 but does not enter the entrance end 15a is indicated as part of the first light flux L1 and the second light flux L2 and as an outer part of the entrance end 15a.

FIG. 6 is a diagram showing a result of a simulation calculation of a relationship between the off-center amounts d1, d2 and light utilization efficiency B. The simulation in FIG. 6 is a calculation example on condition that a cross section of the light intensity equalizing element 15 is a rectangle of 7 mm x 4.5 mm. In FIG. 6, the light utilization efficiency B is indicated as a ratio to the light utilization efficiency when the off-center amounts d1, d2 are 0, that is, when the central ray of the incident light flux to the light intensity equalizing element 15 agrees with the optical axis 15c of the light intensity equalizing element 15 as shown in FIG. 4. Strictly speaking, in the simulation in FIG. 6, the light utilization efficiency B of the second light flux is calculated under the condition that there is no loss light blocked by the second bending mirror 13d. Regarding the first light flux, the light utilization efficiency B shown in FIG. 6 is obtained under the condition that the second bending mirror 13d has sufficient size and there is no loss light that is not reflected by the second bending mirror 13d and therefore cannot enter the entrance face 15a.
From FIG. 6, when the off-center amount d1 is 0, the light utilization efficiency B is 1. When the off-center amount d1 is 0.5 mm, the light utilization efficiency B is 0.99. When the off-center amount d1 is incremented in the order of 1 mm, 1.5 mm, and 2 mm one after another, the light utilization efficiency B decreases in the order of 0.97, 0.92, and 0.84. In the first embodiment, for example, the light utilization efficiency B is high and not less than 0.9, and both of the off-center amounts d1 and d2 are set to 1.5 mm in order to make it difficult to block the second light flux L2 from the second light source lamp 12 by the first bending mirror 14 (i.e., so as to reduce the interference). However, the off-center amounts d1 and d2 can be determined on the basis of various kind of factors such as a shape, a size, arrangement of each element, a traveling direction of the light flux, an optical feature of each element, required performance and the like.

In FIG. 6, when a cross-sectional profile of the light intensity equalizing element 15 is 7 mm x 4.5 mm and the off-center amount d1 is set to 1.5 mm, as shown in FIG. 13A, a distribution on the entrance end 15a of the light intensity equalizing element 15 and the converging are deviated by 1.5 mm. Likewise, when the off-center amount d2 is set to 1.5 mm, a distribution on the entrance end 15a of the light intensity equalizing element 15 is also deviated by 1.5 mm as shown in FIG. 13B. As described above, when the off-center amounts d1 and d2 are set to 1.5 mm, distributions of the converging light flux from the light source lamp 11 and the light source lamp 12 on the entrance end 15a of the light intensity equalizing element 15 includes partially overlapped converging light fluxes of each lamp as shown in FIG. 2B, and thus the light utilization efficiency can be improved.

FIG. 7 is a diagram showing a result of a simulation calculation of a relationship between an off-center amount d3 and light utilization efficiency C. As shown in FIG. 4, in the first embodiment, the end portion 13e of the first bending mirror 13d which is an end on a side of the optical axis 15c of the light intensity equalizing element 15 is disposed on the optical axis 15c of the light intensity equalizing element 15 or is disposed closer to the first light source lamp 11 (an upper part of FIG. 4) in comparison with the optical axis 15c of the light intensity equalizing element 15, in order to avoid an interference with the second light flux L2 from the second light source lamp 12 as much as possible. FIG. 7 shows the result of the simulation calculation of the light utilization efficiency C when the off-center amount d1 in FIG. 4 is fixed to 1.5 mm and the off-center amount d3 varies. The light utilization efficiency C in FIG. 7 is indicated by a ratio relative to the light utilization efficiency when the off-center amount d3 is 1 mm. FIG. 7 shows a change in the light utilization efficiency C when the off-center amount d3 changes from 1 mm to 5 mm. FIG. 7 indicates that if the off-center amount d3 is small, a light flux from the relay optical system 13 is blocked by a side surface of the light intensity equalizing element 15 (an upper part of the light intensity equalizing element 15 in FIG. 4) and thus the light utilization efficiency C is low. If the off-center amount d3 increases from 1 mm, the light utilization efficiency C gradually increases; and if the off-center amount d3 is 3 mm and 3.5 mm, the light utilization efficiency C is the highest.

In the first embodiment, although two light source lamps are used and the second bending mirror 13d is disposed in the synthesizing unit, part of the light fluxes from the two light source lamps 11 and 12 becomes loss light which cannot enter the entrance end 15a of the light intensity equalizing element 15. As shown in FIG. 18, main kinds of the loss light are a light flux L11 which is a light flux emitted from the light source lamp 11 and passing through without reflecting by the bending mirror 13d, a light flux L12 which is reflected by the bending mirror 13d and then does not enter the entrance end 15a of the light intensity equalizing element 15, and a light flux L13 which is not reflected by the bending mirror 13d and then travels toward outside the entrance end 15a of the light intensity equalizing element 15. Furthermore, regarding the light flux of the light source lamp 12, the loss light includes a light flux L21 which is absorbed or reflected by a back surface of the bending mirror 13d and a light flux such as L22 which cannot enter the entrance end 15a of the light intensity equalizing element 15. The bending mirror 13d is placed at a position and is formed to have a size so that the first light flux L1 is reflected and directed toward the entrance end 15a as much as possible and the blocked second light flux L21 can be reduced as little as possible.

In FIG. 7, the change of the light utilization efficiency C has been described. Since a component of the loss light L11 in the light flux emitted from the light source lamp 11 increases if the off-center amount d3 is small, the light utilization efficiency of the light source lamp 11 decreases. On the other hand, regarding the light flux from the light source lamp 12, since the degree of converging of the light flux increases as the light flux approaches the entrance end 15a of the light intensity equalizing element 15. In contrast to this, if the off-center amount d3 gradually increases, the light utilization efficiency of the light source lamp 11 increases and the light utilization efficiency of the light source lamp 12 decreases, the entire light utilization efficiency C of the light source lamp 12 and the light source lamp 22 increases until the off-center amount d3 becomes a certain predetermined value increases as a whole. However, if the off-center amount d3 exceeds the predetermined value and becomes too large (in FIG. 7, the off-center amount d3 exceeds 3.5 mm), the second bending mirror 13 is disposed on the light fluxes with large diameter of the light source lamp 11 and the light source lamp 12 (i.e., where convergence is insufficient) and the loss light component increases and the light utilization efficiency C decreases.

FIG. 8 is a diagram illustrating an example of a shape of the second bending mirror (final bending unit) 13. The bending mirror 13d shown in FIG. 8 is disposed so that the end portion 13e on a side of the light intensity equalizing element 15 is aligned with the optical axis 15c of the light intensity equalizing element 15. In other words, the end portion 13e is placed so as to be parallel to the central ray (i.e., optical axis 12c) of the second light flux L2. In order to guide the first light flux L1 from the first light source lamp 11 to the entrance end 15a of the light intensity equalizing element 15 as much as possible, it is desirable that the reflecting surface 13f of the second bending mirror 13d be formed as large as possible. On the other hand, in order to avoid interference between the second bending mirror 13d and the second light flux L2 from the second light source lamp 12 as much as possible, it is desirable that the second bending mirror 13d be formed as small as possible. Therefore, as shown in FIG. 8, the end portion 13e of the second bending mirror 13d on a side of the optical axis 15c of the light intensity equalizing element 15 is formed so that the reflecting surface 13f is larger than the back surface 13g of the second bending mirror 13d. In FIG. 8, an angle between the reflecting surface 13f and the end portion 13e of the second bending mirror 13d is made to be an acute angle (less than 90 degrees) and the end portion 13e and the optical axis 15c are arranged to be substantially parallel to each other. It is possible to adopt a structure in which an angle between the end portion 13e and the optical axis 15c is a predetermined angle, and a distance between a part of the end portion 13e on a side near the entrance face 15a and the optical axis 15c is shorter than a distance between a part of the end portion 13e on a side far from the entrance face 15a and the optical axis 15c. Accordingly, the light utilization efficiency of the first light flux L1 from the first light source lamp 11 increases as well as the interference between the second light flux L2 of the second light source lamp 12 and the second bending mirror 13d decreases, thereby increasing the light utilization efficiency of the second light source lamp 12.

FIG. 9 is a diagram illustrating another example of a shape of the second bending mirror (final bending unit). The bending mirror 13d2 shown in FIG. 9 is disposed so that the end portion 13e2 on a side of the light intensity equalizing element 15 is aligned with the optical axis 15c of the light intensity equalizing element 15. In order to guide the first light flux L1 from the first light source lamp 11 to the entrance end 15a of the light intensity equalizing element 15 as much as possible, it is desirable that the reflecting surface 13f2 of the second bending mirror 13d2 be formed as large as possible. On the other hand, in order to avoid the interference between the second bending mirror 13d2 and the second light flux L2 and the second light source lamp 12 as much as possible, it is desirable that the second bending mirror 13d2 be formed as small as possible. Therefore, as shown in FIG. 9, a side of the second bending mirror 13d2 facing the optical axis 15c of the light intensity equalizing element 15, namely, the end portion 13e2 facing the second light flux is formed to have a convex curved surface 13g2 of the second bending mirror 13d2 so that the reflecting surface 13f2 is larger than the back surface 13g2. In FIG. 9, an angle between the reflecting surface 13f2 of the second bending mirror 13d2 and the end portion 13e2 is an acute angle (less than 90 degrees). The reason why the end portion 13e2 is formed to have a convex surface, if an angle between the reflecting surface 13f2 and the end portion 13e2 is too small, structures become weak and hard to manufacture and makes it difficult to be manufactured. For this reason, a corner 13h of the end portion 13e in the second bending mirror 13d of FIG. 8, as shown in FIG. 9 as a corner 13h2 of the end portion 13e2, is shaved, and thus the second light flux L2 from the second light source lamp through the light intensity equalizing element 15 to the entrance end 15a is hard to be blocked. That is, an edge of the reflecting surface 13f2 on a side of the optical axis 15c of the light intensity equalizing element 15 is the nearest to the central ray of the second light flux (i.e., optical axis 12c of the second light flux L2). In other words, it is formed so that a first distance is not more than a second distance, where a distance from a side of the reflecting surface 13f2 which is nearest to the central ray of the second light flux the first distance is denoted by the first distance, and a distance from a part nearest to the central ray of the second light flux L2, out of a side surface of the reflecting surface 13d2 which faces the second light flux L2, to the central ray of the second light flux L2 is denoted by the second distance. Even if the second bending mirror having the structure of FIG. 9 is adopted, the light utilization efficiency of the first light flux L1 from the first light source lamp 11 increases, the interference between the second light flux L2 from the second light source lamp 12 and the second bending mirror 13d2 decreases, and the light utilization efficiency of the second light source lamp 12 can be increased.

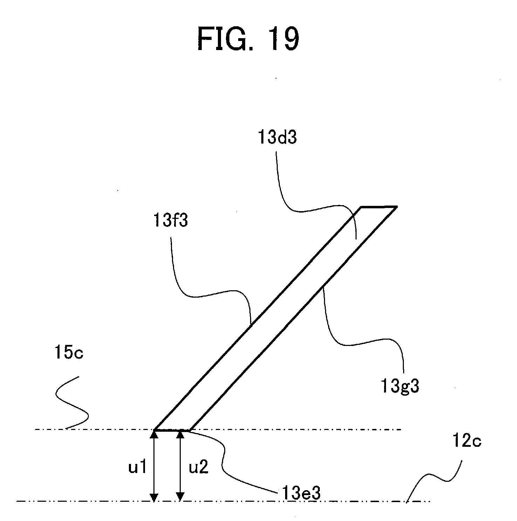

In FIG. 8 and FIG. 9, although the structures in which the reflecting surfaces 13f, 13f2 of the second bending mirrors 13d, 13d2 are larger than the back surfaces 13g, 13g2 are described, such idea is applied to a shape on a side of the optical axis 15c of the light intensity equalizing element 15. For example, as shown in FIG. 19, in a second bending mirror 13d3, if a back surface 13g3 is formed to have the same shape as a light reflecting surface 13f3 of the light intensity equalizing element 15 on a side of the optical axis 15c, the reflecting surface 13f3 and the back surface 13g3 become the same size. Even if it is structured as shown in FIG. 19, the light utilization efficiency can be increased by making an angle between the light reflecting surface 13f3 and an end portion (side surface) 13f2 acute in a similar manner to the cases in FIG. 8 and FIG. 9. In other words, if the structures are formed so that a first distance (e.g., u1) from an end portion of the reflecting surface 12f3 which is the nearest to the central ray 12c of the second light flux L2 to the central ray 12c of the second light flux L2 is not more than a second distance (e.g., u2) from a part of the side surface 13f2 which is the nearest to the central ray 12c of the second light flux L2 to the central ray 12c of the second light flux L2 (i.e., u1 ≦ u2), the light utilization efficiency can be improved. However, as shown in FIG. 9, even if u1 > u2, the light utilization efficiency can be improved by making a value (u1 - u2) as small as possible.

As described above, in the projection type display apparatus according to the first embodiment, it is structured that the first light source lamp 11 and the second light source lamp 12 are disposed substantially in parallel, it is arranged so that the first optical axes 11c1, 11c2 and 11c3 of the first light source lamp 11 and the second optical axis 12c of the second light source lamp 12 agree at nowhere with each other, and thereby a structure that high light utilization efficiency is obtained and the light source lamp 11 and the light source lamp 12 are free from influence of loss light from each other can be achieved.

Further, in the projection type display apparatus according to the first embodiment, since the light converging points of the first light source lamp 11 and the second light source lamp 12 are disposed near the entrance end 15a of the light intensity equalizing element 15, an optical system with high light utilization efficiency can be provided.

Furthermore, the projection type display apparatus according to the first embodiment has a structure that the relay optical system 13 is disposed between the first light source lamp 11 and the second light converging point F2, the first light flux L1 converges near the entrance end 15a of the light intensity equalizing element 15, and the second light flux L2 from the second light source lamp 12 is directly collected near the entrance end 15a of the light intensity equalizing element 15, and thereby an optical system with high light utilization efficiency can be provided.

Moreover, in the projection type display apparatus according to the first embodiment, since the second bending mirror 13d is structured so that the reflection surface 13 differs from the back surface 13g in shape and is larger than the back surface 13g, an optical system with high light utilization efficiency can be provided.

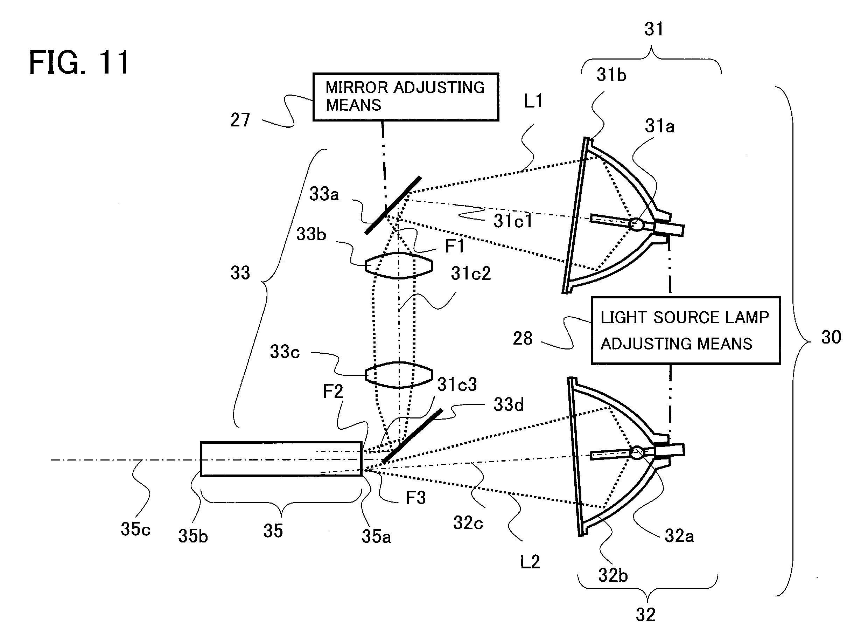

The projection type display apparatus according to the first embodiment can have a mirror adjusting means (a mechanism 27 shown in FIG. 11 described later) as a bending adjusting unit capable of adjusting any of a position, an angle and both of them of any of the bending mirror 13a, the bending mirror 13d and both of them. In this case, even if a difference in size or positional deviations occur in the light source lamp 11 and the light source lamp 12, the amount of incident light on the light intensity equalizing element 15 can be adjusted by adjustment of the mirror adjusting means, and thereby an optical system with high light utilization efficiency can be provided. Moreover, in the case where such mirror adjusting means is provided, when either one of the light source lamp 11 or the light source lamp 12 is lighted, a position of the bending mirror 13d is shifted to a side of the other light source lamp which is not lighted (if only the light source lamp 11 is lighted, the bending mirror 13d is shifted to a side of the optical axis 12c of the light source lamp 12, and if only the light source lamp 12 is shifted, the bending mirror 13d is shifted to a side of the optical axis 11c of the light source lamp 11.).

In the projection type display apparatus according to the first embodiment, it is also available that the light source lamp 11 or the light source lamp 12 or both of the lamps includes/include a light source lamp adjusting means (not shown in the drawings) being capable of adjusting a position or an angle or both of the position and the angle of the light source lamp. In this case, even if the light source lamp 11 and the light source lamp 12 shift in position or differ in size, amount of incident light on the light intensity equalizing element 15 can be adjusted by the light source lamp adjusting means, and thereby an optical system with high light utilization efficiency can be provided.

Further, in the projection type display apparatus according to the first embodiment, if the light intensity equalizing element 15 is structured by a pipe-shaped element whose inner surface is a light reflection surface, a holding structure of the light intensity equalizing element 15 can be easily designed and heat radiation performance can be improved.

Furthermore, in the projection type display apparatus according to the first embodiment, if the light intensity equalizing element 15 is a pillar-shaped optical element being structured with transparent material and having a polygonal cross section, the light intensity equalizing element 15 can be easily designed.

In the projection type display apparatus according to the first embodiment, the elements are arranged so that the light converging points are disposed closer to the light intensity equalizing element 15 in comparison with the second bending mirror 13d, and thereby the bending mirror can be prevented from heating. Therefore, in the projection type display apparatus according to the first embodiment, simplification of the structure and cost reduction of the apparatus can be realized without adding a cooling device or the like.

### Second Embodiment

FIG. 10 is a diagram schematically illustrating a structure of a light source device 20 in a projection type display apparatus according to a second embodiment of the present invention. The light source device 20 shown in FIG. 10 can be used as a light source device for the projection type display apparatus shown in FIG. 1 (the first embodiment). A first light source lamp 21, a second light source lamp 22 and a relay optical system 23 in FIG. 10 are similar in structure to the first light source lamp 11, the second light source lamp 12 and the relay optical system 13 in FIG. 1 (the first embodiment), respectively. Illuminators 21a and 22a, ellipsoidal mirrors 21b and 22b, and optical axes 21c1, 21c2, 21c3 and 22c in FIG. 10 are similar in structure to the illuminators 11a and 12a, the ellipsoidal mirrors 11b and 12b, and the optical axes 11c1, 11c2, 11c3 and 12c in FIG. 1, respectively. The projection type display apparatus according to the second embodiment differs from the above-described projection type display apparatus according to the first embodiment in a structure of a light intensity equalizing element 25. As shown in FIG. 10, in the second embodiment, the light intensity equalizing element 25 is structured so that lens arrays 25a and 25b having a plurality of lens elements arranged in a two-dimensional array are disposed in line in a direction of an optical axis 25c. A first light flux L1 from the first light source lamp 11 and a second light flux L2 from the second light source lamp 12 are guided by lens elements 26a and 26b to the light intensity equalizing element 25. The light intensity equalizing element 25 having such structure makes it possible to equalize intensity distribution in a cross section of an illumination light flux and to prevent illumination irregularities. The projection type display apparatus according to the second embodiment can be reduced in size in a direction of the optical axis 25c, in comparison with the case where the light intensity equalizing element is structured by a rod which is an optical element.

Except for the respects described above, the second embodiment is the same as the above-described first embodiment.

### Third Embodiment

FIG. 11 is a diagram schematically illustrating a structure of a light source device 30 in a projection type display apparatus according to a third embodiment of the present invention. The light source device 30 shown in FIG. 11 can be used as a light source device of the projection type display apparatus shown in FIG. 1 (the first embodiment). A first light source lamp 31, a second light source lamp 32, a relay optical system 33 and a light intensity equalizing element 35 in FIG. 11 are similar in structure to the first light source lamp 11, the second light source lamp 12, the relay optical system 13 and the light intensity equalizing element 15 in FIG. 1, respectively. Illuminators 31a and 32a, ellipsoidal mirrors 31b and 32b, optical axes 31c1, 31c2, 31c3 and 32c, an entrance end 35a, an exit end 35b and an optical axis 35c in FIG. 11 are similar in structure to the illuminators 11a and 12a, the ellipsoidal mirrors 11b and 12b, the optical axes 11c1, 11c2, 11c3 and 12c, the entrance end 15a, the exit end 15b and the optical axis 15c in FIG. 1, respectively. The projection type display apparatus according to the third embodiment differs from the above-described projection type display apparatus according to the first embodiment in a respect that the first light source lamp 31, the second light source lamp 32, the relay optical system 33 and the light intensity equalizing element 35 are arranged so that the optical axes 31cl, 31c2 and 31c3 of a first light flux L1 and the optical axis 35c of the light intensity equalizing element 35 are not parallel and the optical axis 32c of a second light flux L2 and the optical axis 35c of the light intensity equalizing element 35 are not parallel. Thus, the first light source lamp 31 and the second light source lamp 32 are arranged so that the optical axis 31c1 of the first light flux L1 at a time immediately after emission from the first light source lamp 31 and the optical axis 32c of the second light flux L2 at a time immediately after emission from the second light source lamp 32 have a larger interval therebetween as the light fluxes travel further. According to the structure in the third embodiment, a size of the light source device 30 can be shortened in a longitudinal direction in FIG. 11.

Furthermore, as shown in FIG. 11, the projection type display apparatus can have a mirror adjusting means (mechanism 27) capable of adjusting any of a position, an angle and both of them of any of a bending mirror 33a, a bending mirror 33d and both of them. Moreover, the projection type display apparatus can have a light source lamp adjusting means (mechanism 28) capable of adjusting any of a position, an angle and both of them of any of the light source lamp 11, the light source lamp 12 and both of them. The mechanisms 27 and 28 include mechanical structures for moving or rotating a structural component supporting the bending mirror or the light source lamp.
The mechanisms 27 and 28 may include a driving source such as a motor for driving the mechanical structure forming them. Furthermore, the mechanism 27 and 28 can be applied to other embodiments.

Although, in FIG. 11, the first light source lamp 31 is disposed at an upper side of FIG. 11 and the second light source lamp 32 is disposed at a lower side of FIG. 11, they can be inversely disposed. It is also practicable that either the optical axis of the first light source lamp 31 or the optical axis of the second light source lamp 32 (31c1 or 32c) is disposed in parallel with the optical axis 35c of the light intensity equalizing element 35.

Although it is possible that each of the optical axis of the first light flux at a time immediately after emission from the first light source lamp 31 and the optical axis of the second light flux at a time immediately after emission from the second light source lamp 32 has an inclination angle within a range of about ± 15 degrees from a horizontal direction in FIG. 11, it is desirable for the inclination angle to be within a range of ± 5 degrees, in order to achieve sufficient performance of the first light source lamp 31 and the second light source lamp 32. Furthermore, in consideration of such as facility to make a structure of the relay optical system 33, it is more desirable that the inclination angles of the optical axis of the first light source lamp 31 and the optical axis of the second light source lamp 32 be within a range of ±3 degrees from the horizontal direction in FIG. 11 (or that an angle between the optical axis of the first light source lamp 31 and the optical axis of the second light source lamp 32 be 6 degrees or less).

Except for the respects described above, the third embodiment is the same as the above-described first or second embodiment. Furthermore, the first light source lamp 31 or the second light source lamp 32 in the third embodiment can be applied to the light source device in the second embodiment.

### Fourth Embodiment

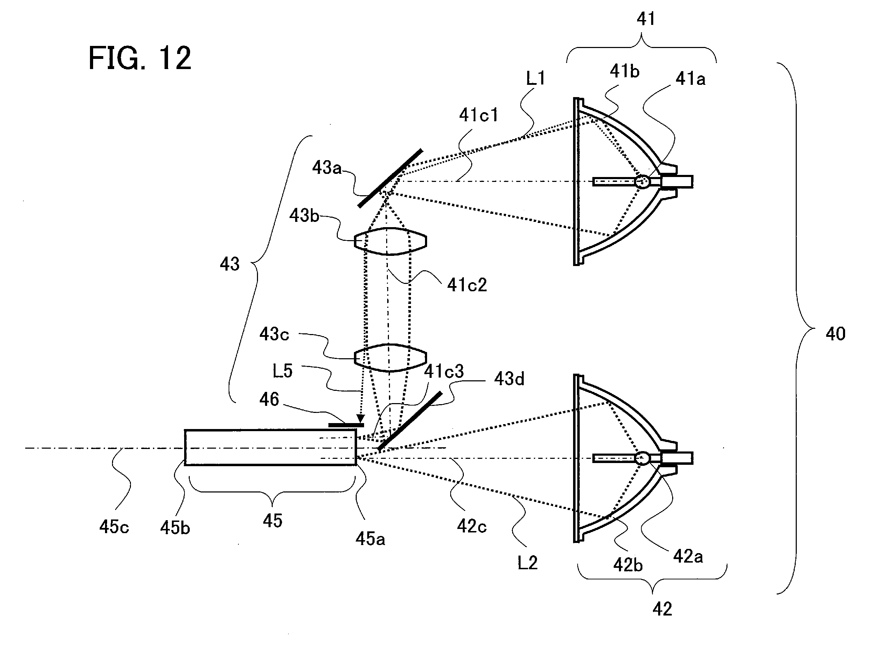

FIG. 12 is a diagram schematically illustrating a structure of a light source device 40 in a projection type display apparatus according to a fourth embodiment of the present invention. The light source device 40 shown in FIG. 12 can be used as the light source device for the projection type display apparatus shown in FIG. 1 (the first embodiment). A first light source lamp 41, a second light source lamp 42, a relay optical system 43 and a light intensity equalizing element 45 in FIG. 12 are similar in structure to the first light source lamp 11, the second light source lamp 12, the relay optical system 13 and the light intensity equalizing element 15 in FIG. 1, respectively. Illuminators 41a and 42a, ellipsoidal mirrors 41b and 42b, optical axes 41c1, 41c2, 41c3 and 42c, an entrance end 45a, an exit end 45b and an optical axis 45c in FIG. 12 are similar in structure to the illuminators 11a and 12a, the ellipsoidal mirrors 11b and 12b, the optical axes 11c1, 11c2, 11c3 and 12c, the entrance end 15a, the exit end 15b and the optical axis 15c in FIG. 1, respectively.

The projection type display apparatus according to the fourth embodiment differs from the above-described projection type display apparatus according to the first embodiment in a respect that a light blocking plate 46 is provided adjacent to the entrance end 45a of the light intensity equalizing element 45 and is a blocking unit for blocking (reflecting or absorbing) loss light L5 which does not reach a second bending mirror 43d in a light flux from the first light source lamp 41. Furthermore, the light blocking plate 46 also has a function of blocking (reflecting or absorbing) a light flux which is emitted from the first light source lamp 41 and travels toward a side of the light intensity equalizing element 45 (an upper surface of the light intensity equalizing element 45 in FIG. 12). Any material is available for the light blocking plate 46, if it does not transmit light.

It is desirable that the light blocking plate 46 be disposed at a position so as not to block the light flux L1 traveling from the first light source lamp 41 toward the second bending mirror 43d. It is also desirable that the light blocking plate 46 have such a position, a size (a length and a width) and a shape as to block the loss light L5 which does not reach the second bending mirror 43d in the light flux from the first light source lamp 41 as much as possible.

As shown in FIG. 12, in the fourth embodiment, the loss light L5 which does not reach a first bending mirror 73 in the light flux traveling from the first light source lamp 41 and loss light in a light flux traveling from the second light source lamp 72 can be blocked by the light blocking plate 46. For this reason, the loss light traveling from the first light source lamp 41 toward a side surface of the light intensity equalizing element 45 decreases, and thus there is an effect that thermal influence on the light intensity equalizing element 45 can be reduced.

Except for the respects described above, the fourth embodiment is the same as the above-described first embodiment. Furthermore, the light blocking plate 46 can be applied to the above-described second or third embodiment.

### EXPLANATION OF REFERENCE CHARACTERS

10, 20, 30, 40 light source device; 11, 21, 31, 41 first light source lamp; 11a, 21a, 31a, 41a illuminator; 11b, 21b, 31b, 41b ellipsoidal mirror; 11c1, 11c2, 11c3, 21c1, 21c2, 21c3, 31c1, 31c2, 31c3, 41c1, 41c2, 41c3 optical axis of first light source lamp; 12, 22, 32, 42 second light source lamp; 12a, 22a, 32a, 42a illuminator; 12b, 22b, 32b, 42b ellipsoidal mirror; 12c, 22c, 32c, 42c optical axis of second light source lamp; 13, 23, 33, 43 relay optical system; 15, 25, 35, 45 light intensity equalizing element; 15a, 25a, 35a, 45a entrance end of light intensity equalizing element; 15b, 25b, 35b, 45b exit end of light intensity equalizing element; 15c, 25c, 35c, 45c optical axis of light intensity equalizing element; 27 mirror adjusting means; 28 light source lamp adjusting means; 61 image display element; 62 projection optical system; 63 screen; 46 light blocking plate; L1 first light flux; L2 second light flux; L3 exit light from light intensity equalizing element; L4 image light; L5 first loss light; L10 central ray of first light flux; L20 central ray of second light flux; F1 first light converging point; F2 second light converging point; F3 third light converging point.

## Claims

1. A light source device comprising:
a light intensity equalizing unit including an entrance end and an exit end, the light intensity equalizing unit converting a light flux incident on the entrance end into a light flux with an equalized intensity distribution, which is emitted from the exit end;
a first light source unit emitting a first light flux;
at least one bending unit guiding the first light flux emitted from the first light source unit to the entrance end of the light intensity equalizing unit; and
a second light source unit emitting a second light flux traveling toward the entrance end of the light intensity equalizing unit;
wherein the first light source unit, the second light source unit and the bending unit are arranged so that there is no part where an optical axis of the first light flux from the first light source unit through the bending unit to the entrance end of the light intensity equalizing unit and an optical axis of the second light flux from the second light source unit to the entrance end of the light intensity equalizing unit agree with each other, and the optical axis of the first light flux immediately before incidence on the entrance end and the optical axis of the second light flux from the second light source means to the entrance end are substantially parallel to each other.

2. The light source device according to claim 1, wherein
a central component of the first light flux emitted from a light emitting center of the first light source unit among the first light flux and a central component of the second light flux emitted from a light emitting center of the second light source unit are converging light fluxes, and
the first light source unit, the second light source unit, a final bending unit and the light intensity equalizing unit are arranged so that a last light converging point of the central component of the first light flux is disposed on a side of the light intensity equalizing unit relative to the final bending unit which is a bending unit disposed at the nearest position to the light intensity equalizing unit, and a light converging point of the central component of the second light flux is disposed on a side of the light intensity equalizing unit relative to the final bending unit.

3. The light source device according to claim 2, wherein the final bending unit is disposed at a position so as not to block a central ray of the second light flux traveling toward the entrance end from the second light source unit.

4. The light source device according to claim 2 or 3, comprising a bending adjusting unit capable of adjusting any of a position, an angle and both of them of said at least one bending unit.

5. The light source device according to any one of claims 1 to 4, comprising a light source adjusting unit capable of adjusting any of a position, an angle and both of them of at least one of the first and second light source units.

6. The light source device according to any one of claims 1 to 5, wherein a first incidence position where a central ray of the first light flux enters the entrance end and a second incidence position where a central ray of the second light flux enters the entrance end are different positions from each other, and are positions which are shifted from an optical axis of the light intensity equalizing unit.

7. The light source device according to claim 6, wherein the first incidence position and the second incidence position are set to be shifted to opposite directions respectively with reference to the optical axis of the light intensity equalizing unit.

8. The light source device according to claim 6, wherein
the entrance end is a rectangle having a long side and a short side, and
the first incidence position and the second incidence position are set to be shifted in a direction of the long side to opposite directions respectively with reference to the optical axis of the light intensity equalizing unit.

9. The light source device according to claim 8, wherein the first incidence position and the second incidence position are positions disposed on a first reference line which extends in the direction of the long side and passes through the optical axis of the light intensity equalizing unit.

10. The light source device according to claim 6, wherein
the entrance end is a rectangle having a long side and a short side, and
the first incidence position and the second incidence position are set to be shifted in a direction of the long side to opposite directions respectively with reference to the optical axis of the light intensity equalizing unit and to be shifted in a direction of the short side to opposite directions respectively with reference to the optical axis of the light intensity equalizing unit.

11. The light source device according to any one of claims 1 to 10, wherein the final bending unit
has a reflecting surface for reflecting the first light flux, a back surface which is a reverse surface of the reflecting surface, and a side surface connecting the reflecting surface and the back surface, and
is formed so that a first distance from a side of the reflecting surface which is the nearest to the central ray of the second light flux to the central ray of the second light flux is not more than a second distance from a portion of the side surface which is the nearest to the central ray of the second light flux to the central ray of the second light flux.

12. The light source device according to any one of claims 1 to 11, comprising a blocking unit disposed adjacent to the entrance end and blocking light which is emitted from the first light source unit and does not enter the incidence surface.

13. The light source device according to any one of claims 1 to 12, wherein the light intensity equalizing unit includes a pipe-shaped component having a light reflection surface as an inner surface.

14. The light source device according to any one of claims 1 to 12, wherein the light intensity equalizing unit includes a polygonal pillar-shaped component made of transparent material.

15. The light source device according to any one of claims 1 to 12, wherein the light intensity equalizing unit includes a lens array having a plurality of lens elements arranged in a two-dimensional array.

16. The light source device according to any one of claims 1 to 15, wherein the first light source unit and the second light source unit are arranged so that an optical axis of the first light flux at a time immediately after emission from the first light source unit and an optical axis of the second light flux at a time immediately after emission from the second light source unit are substantially parallel to each other.

17. The light source device according to claim 16, wherein the first light source unit and the second light source unit are arranged so that an angle between the optical axis of the first light flux at a time immediately after emission from the first light source unit and the optical axis of the second light flux emitted from the second light source unit are substantially parallel to each other.

18. A projection type display apparatus comprising the light source device of any one of claims 1 to 17.
